Europäisches Patentamt

European Patent Office

Office européen des brevets

(11) Veröffentlichungsnummer: **0 361 590 B1**

# EUROPÄISCHE PATENTSCHRIFT

(45) Veröffentlichungstag der Patentschrift: **19.01.94**

(51) Int. Cl.5: **G01L 9/12**

(21) Anmeldenummer: **89202356.5**

(22) Anmeldetag: **18.09.89**

(54) **Schaltungsanordnung zur Temperaturkompensation von kapazitiven Druck- und Differenzdrucksensoren.**

(30) Priorität: **24.09.88 DE 3832568**

(43) Veröffentlichungstag der Anmeldung:
**04.04.90 Patentblatt 90/14**

(45) Bekanntmachung des Hinweises auf die Patenterteilung:
**19.01.94 Patentblatt 94/03**

(84) Benannte Vertragsstaaten:
**DE FR GB**

(56) Entgegenhaltungen:
**DE-A- 3 340 834**
**GB-A- 2 072 856**

(73) Patentinhaber: **ENVEC Mess- und Regeltechnik GmbH + Co.**
**Miramstrasse 87**
**D-34123 Kassel(DE)**

(72) Erfinder: **Kordts, Jürgen**
**Schinkelring 63a**
**D-2000 Norderstedt(DE)**

(74) Vertreter: **Morstadt, Volker, Dipl.-Ing.**
**c/o Endress + Hauser Flowtec AG**
**Kägenstrasse 7**
**Postfach 435**
**CH-4153 Reinach (BL) 1 (CH)**

**Beschreibung**

Die Erfindung bezieht sich auf eine Schaltungsanordnung zur Temperaturkompensation von kapazitiven Druck- und Differenzdrucksensoren

mit zwei Meßkondensatoren, die jeweils im Rückkopplungszweig zweier Meßintegratoren angeordnet sind und deren sich mit dem zu erfassenden Druck bzw. Differenzdruck ändernde Kapazitätswerte von den Meßintegratoren zu Meßsignalen umgeformt werden, und
mit einer Gegenkopplungsschaltung, welche wenigstens aus einem dieser Meßsignale ein temperaturabhängiges Ansteuerungssignal für die Meßintegratoren erzeugt.

Aus der DE-PS 33 40 834 ist eine solche Schaltungsanordnung bekannt, die den Temperatureinfluß bei der Messung des Differenzdruckes eines Differenzdrucksensors kompensiert. Darin wird jeweils eine Schaltungsanordnung zur Temperaturkompensation für einen Zweikammer-Differenzdrucksensor und einen Einkammer-Differenzdrucksensor beschrieben. Der Zweikammer-Differenzdrucksensor enthält zwei einen mit einer inkompressiblen Flüssigkeit gefüllten Raum abschließende Meßmembranen. Dieser Raum wird von einer elektrisch isolierenden Trennmembran zweigeteilt, die beidseitig mit Schichtelektroden belegt ist. Den Schichtelektroden gegenüber liegen weitere Elektroden auf dem Grundkörper des Sensors zur Bildung zweier Meßkondensatoren. Bei einer Temperaturveränderung ändert sich die Dielektrizitätskonstante der Flüssigkeit und damit die Kapazität jedes Meßkondensators. Zur Kompensation dieses Temperaturfehlers wird die Summe der Meßsignale verwendet, die in gleichem Maße von der Temperatur abhängt, wie die Differenz der Meßsignale, die aber vom Differenzdruck unabhängig sind. Der Differenzdruck P läßt sich also über folgende Gleichung ermitteln:

$$P = \frac{K0 \; (1/C1 - 1/C2 + K1)}{1/C1 + 1/C2} \qquad (1).$$

Durch die Konstante K1 wird der temperaturabhängige Nullpunktversatz beschrieben, und die Konstante K0 stellt eine Proportionalitätskonstante dar. Die Schaltungsanordnung zur Temperaturkompensation bei einem Zweikammer-Differenzdrucksensor enthält zwei Meßintegratoren, in deren Rückkopplungszweig jeweils ein Meßkondensator eingefügt ist. Die sich mit dem zu erfassenden Differenzdruck ändernden Kapazitätswerte werden von den Meßintegratoren als Meßsignale einer Gegenkopplungsschaltung zugeführt, welche die Meßsignale zur Bildung eines Regelsignals summiert und einem Vergleicher zum Vergleich mit einer Referenzgröße zuführt. Die Differenz zwischen Regelsignal und Referenzgröße wird einem Regler zugeleitet, der einen Oszillator steuert, welcher die Meßintegratoren mit einem Wechselsignal (Ansteuersignal) beaufschlagt. Die Regelung wird dabei so durchgeführt, daß auch bei einer temperaturbedingten Änderung der Kapazitäten der Meßkondensatoren die Amplituden der Meßsignale durch eine Änderung der Frequenz und/oder der Amplitude des Wechselsignals konstant bleiben. Dadurch bleibt ebenfalls der aus den Wechselsignalen in einem Rechenglied berechnete Differenzdruckmeßwert trotz einer Temperaturänderung der Flüssigkeit konstant.

Der Einkammer-Differenzdrucksensor besteht dagegen aus zwei elektrisch leitfähigen Membranen, die einen mit einer Flüssigkeit gefüllten Hohlraum abschließen. Die Membranen bilden mit auf einem Grundkörper angeordneten, gegenüberliegenden Schichtelektroden jeweils einen Meßkondensator. Hierbei ist die Temperaturabhängigkeit bei der Differenz und der Summe der reziproken Kapazitätswerte der Meßkondensatoren nicht gleich. Diese Abhängigkeit läßt sich durch die beiden folgenden Gleichungen ausdrücken:

$$1/C1 + 1/C2 = e + f \, T \qquad (2)$$

$$1/C1 - 1/C2 = a + b \, T + (c + d \, T) \, P \qquad (3)$$

wobei a, b, c, d, e und f Konstanten sind, T die Differenz zwischen einer Referenztemperatur und der Betriebstemperatur und P die Druckdifferenz darstellen. Die Bestimmung der Konstanten a, b, c, d, e und f läßt sich der oben genannten Schrift DE-PS 33 40 834 entnehmen. Aus den Gleichungen (2) und (3) ergibt sich nun für den Differenzdruck:

$$P = \frac{K2 + K3 \, 1/C1 - K4 \, 1/C2}{K5 + K6 \, (1/C1 + 1/C2)} \qquad (4)$$

mit

$K2 = b\,e - a\,f$
$K3 = f - b$
$K4 = f + b$
$K5 = c\,f - d\,e$
$K6 = d$.

Die Schaltungsanordnung zur Temperaturkompensation bei einem Einkammer-Differenzdrucksensor enthält außer den beiden Meßintegratoren einen zusätzlichen Referenzintegrator, ohne den der Einfluß des temperaturabhängigen Terms c + d T nicht eliminierbar ist. In der Gegenkopplungsschaltung werden zur Erzeugung des mit der Referenzgröße zu vergleichenden Regelsignals außer der Summierung der beiden Meßsignale weitere arithmetische Operationen durchgeführt. Der Regler steuert den das Wechselsignal für die Meßintegratoren und den Referenzintegrator liefernden Oszillator so, daß bei einer temperaturbedingten Änderung der Kapazitätswerte der Meßkondensatoren die Amplituden der Meßsignale durch eine Änderung der Frequenz und/oder der Amplitude des Wechselsignals konstant bleiben. In einem nachgeschalteten Rechenglied wird der temperaturunabhängige Differenzdruck ermittelt.

In der Gegenkopplungsschaltung werden zur Bildung eines Referenzsignals mehrere Addierer und Multiplizierer und zur Erzeugung eines Wechselsignals ein Vergleicher, ein Regler und ein Oszillator verwendet.

Bei Drucksensoren, die nicht nach dem Differenzdruckprinzip arbeiten, kann ebenfalls das Prinzip der oben genannten Schaltungsanordnung (DE-PS 33 40 834) zur Temperaturkompensation angewendet werden. Solche Drucksensoren weisen wenigstens eine auf einem Grundkörper angeordnete Elektrode auf, deren Gegenelektrode an der Membran angebracht ist. Um eine Temperaturkompensation vornehmen zu können, wird außer dem dadurch gebildeten ersten Meßkondensator ein als Referenzkondensator ausgebildeter weiterer Meßkondensator durch eine Elektrode an der Membran und eine Gegenelektrode am Grundkörper realisiert. Die mittels der Meßintegratoren gewonnenen Meßsignale können einzeln oder als Summe zur Temperaturkompensation der Gegenkopplungsschaltung zugeführt werden.

Ferner wird noch auf die GB-A-2 072 856 bzw. deren Prioritätsanmeldung DE-A1-30 11 594 hingewiesen, aus der ein Weg-Frequenz-Meßgrößenwandler hervorgeht, dessen Gegenkopplungsschaltung einen Oszillator mit einem Summierer und einer ein rechteckförmiges Aussteuerungssignal erzeugende Schmitt-Trigger-Schaltung enthält, wodurch es möglich sein soll, u.a. Temperaturgänge der Schaltung zu unterdrükken. Ein Hinweis, den Temperatureinfluß auf die Flüssigkeit zwischen den Membranen bei der Messung zu kompensieren, ist hieraus nicht bekannt.

Der Erfindung liegt daher die Aufgabe zugrunde, eine Schaltungsanordnung zur Temperaturkompensation von kapazitiven Druck- und Differenzdrucksensoren zu schaffen, die eine einfach aufgebaute Gegenkopplungsschaltung enthält.

Diese Aufgabe wird bei einer Schaltungsanordnung der eingangs genannten Art dadurch gelöst, daß die Gegenkopplungsschaltung eine einzige Schmitt-Trigger-Schaltung enthält, mit vorgegebenen und vom temperaturbeeinflußten Meßsignal angesteuerten Schaltschwellen, zur Erzeugung eines rechteckförmigen in seiner Frequenz temperaturabhängigen Ansteuersignals.

Die erfindungsgemäße Schaltungsanordnung enthält in der Gegenkopplungsschaltung außer einem eventuell vorzusehenden Summierer nur eine Schmitt-Trigger-Schaltung. Ein dreieckförmiges Summationssignal, das bei den Differenzdrucksensoren aus den summierten Meßsignalen und bei einem anderen Drucksensor, der nicht nach dem Differenzdruckprinzip arbeitet, z.B. aus dem vom Referenzkondensator abgeleiteten Meßsignal herrührt, wird der Schmitt-Trigger-Schaltung zugeführt, die hieraus ein rechteckförmiges Ansteuersignal für die Meßintegratoren erzeugt. Die Schaltschwellen der Schmitt-Trigger-Schaltung sind vorgegeben. Steigt das Summationssignal, wird bei Erreichen einer Schaltschwelle das Ausgangssignal der Schmitt-Trigger-Schaltung verändert, z.B. geht das rechteckförmige Ansteuersignal von einem niedrigen auf einen hohen Wert. Durch das Umschalten sinkt anschließend das Summationssignal. Bei Erreichen der anderen Schaltschwelle wird das Ausgangssignal der Schmitt-Trigger-Schaltung wieder verändert, z.B. geht das Ansteuersignal von einem hohen auf einen niedrigen Wert. Das rechteckförmige Ansteuersignal wird also abhängig von dem Summationssignal gesteuert.

Zur Kompensation des Temperatureinflusses wird das Summationssignal gebildet, das von der Temperatur, aber nicht vom Druck abhängt. Beispielsweise ist bei einem Differenzdrucksensor die Summe der Meßsignale, aus der das Summationssignal abgeleitet wird, von der Temperatur, aber nicht vom Differenzdruck abhängig.

Bei einer Änderung der Temperatur verändert sich die Steigung der dreieckförmigen Meßsignale. Damit wird aber auch eine Schaltschwelle der Schmitt-Trigger-Schaltung zu einem anderen Zeitpunkt erreicht. Beispielsweise wird bei einer größeren Steigung die Schaltschwelle schneller erreicht gegenüber dem Zustand vor der Änderung der Temperatur. Daraus ergibt sich, daß sich die Frequenz des Ansteuersignals bzw. der Meßsignale im gleichen Maße verändert wie die Temperatur und nicht die Amplitude der Ansteuersignale.

Aus den Meßsignalen wird beim Differenzdrucksensor durch eine Differenzbildung der Differenzdruckwert ermittelt. Da die Amplituden der Meßsignale bei einer Temperaturänderung aufgrund der Schmitt-Trigger-Schaltung konstant bleibt, bleibt auch der aus den Meßsignalen berechnete Differenzdruckwert bis auf einen Anteil, der von einem temperaturabhängigen Nullpunktversatz herrührt, bei konstantem Differenzdruck trotz einer Änderung der Temperatur weitgehend konstant.

Beim Differenzdrucksensor wird die Summe der Meßsignale gebildet. Diese Summenbildung kann beispielsweise ein als Summierer ausgeführter Operationsverstärker vornehmen. Die das Summationssignal erhaltene Schmitt-Trigger-Schaltung kann ebenfalls aus einem Operationsverstärker bestehen, der mit einem Mitkopplungs-Widerstandsnetzwerk beschaltet ist. Bei einer anderen Ausbildung der Schmitt-Trigger-Schaltung ist vorgesehen, daß die Schmitt-Trigger-Schaltung einen Umschalter zur Bereitsstellung des rechteckförmigen Ansteuersignals durch Umschaltung zwischen zwei Signalpegeln an seinem Ausgang enthält, der über einen Mitkopplungswiderstand an den über einen Widerstand mit einem Ausgang wenigstens eines Meßintegrators gekoppelten Steuereingang angeschlossen ist.

Bei dieser Schmitt-Trigger-Schaltung sollten die beiden Signalpegel vorzugsweise den gleichen Betrag aufweisen, aber ein unterschiedliches Vorzeichen. Vorzugsweise liegen dann die Schaltschwellen bei Null. Durch die Mitkopplung über den Mitkopplungswiderstand wird zu dem Regelsignal ein Teil des Ansteuersignals summiert. Ein Anstieg der dreieckförmigen Meßsignale geht also von einem negativen Wert bis Null. Dann schaltet der Umschalter um. Nach der Umschaltung wird aufgrund der Mitkopplung das Signal am Steuereingang auf einen positiven Wert gebracht. Dieser Wert wird durch die absinkenden, dreieckförmigen Meßsignale verringert bis zum Wert Null. Dann wird wieder umgeschaltet, und am Steuereingang des Umschalters liegt wieder ein negativer Wert an. Die Schmitt-Trigger-Schaltung mit einem Umschalter ist einfach zu realisieren und weist kurze Ansprechzeiten auf.

Bei einem Einkammer-Differenzdrucksensor ist gegenüber dem Zweikammer-Differenzdrucksensor eine zusätzliche Abhängigkeit von der Temperatur vorhanden, die durch den Term c + d T der Gleichung (3) ausgedrückt wird. Um den Temperaturfehler des Einkammer-Differenzdrucksensors vollständig zu kompensieren, ist daher ein Referenzintegrator vorgesehen, der das Ansteuersignal von der Schmitt-Trigger-Schaltung erhält und daß die Schmitt-Trigger-Schaltung aus der Summe der Meßsignale und des vom Referenzintegrator gebildeten Referenzsignals das Ansteuersignal erzeugt. Auch bei Drucksensoren, die nicht nach dem Differenzdruckprinzip arbeiten, kann ein solcher Referenzintegrator notwendig sein, um eine zusätzliche Temperaturabhängigkeit zu kompensieren. Hierbei kann es auch erforderlich sein, das Ansteuersignal mittels eines Inverters zu invertieren und als invertiertes Ansteuersignal den Meßintegratoren und dem Referenzintegrator zuzuführen.

Um einen Differenzdruckwert zu erhalten, ist vorgesehen, daß die Differenz der dreieckförmigen Meßsignale und eine Nullpunktkorrektur in einem Rechenglied gebildet und daraus die Gleichrichtung in einer Gleichrichterschaltung ein Gleichsignal gewonnen wird, welches proportional dem Differenzdruck ist. In dem Rechenglied wird die Differenz der Meßsignale gebildet und zusätzlich eine temperaturabhängige Nullpunktkorrektur durchgeführt. Das Ausgangssignal des Rechengliedes ist ein Wechselsignal, das durch Gleichrichtung zu einem Gleichsignal umgeformt werden kann, was den Differenzdruckwert darstellt.

In einer Weiterbildung der Erfindung ist vorgesehen, daß die Gleichrichterschaltung einen Demultiplexer, der die positive Halbwelle des Ausgangssignals des Rechengliedes einem ersten Mittelwertbildner und die negative Halbwelle einem zweiten Mittelwertbildner zuführt, und ein Differenzglied enthält, das die Differenz der Ausgangssignale der Mittelwertbildner bildet. Diese Gleichrichterschaltung hat den Vorteil, daß ein Offset des Ausgangssignals des Rechengliedes unterdrückt wird und daß eine Veränderung der Schaltschwellen des Demultiplexers keinen Einfluß hat.

4

Ausführungsbeispiele der Erfindung werden nachstehend anhand der Zeichnungen näher erläutert. Es zeigen:

Fig. 1 ein Blockschaltbild einer Schaltungsanordnung zur Temperaturkompensation eines kapazitiven Differenzdrucksensors,

Fig. 2 schematisch skizzierte Signale, die in der Schaltungsanordnung nach Fig. 1 auftreten,

Fig. 3 eine detailliert gezeichnete Schaltungsanordnung nach Fig. 1 und

Fig. 4 schematisch skizzierte Signale, die in der in Fig. 3 verwendeten Gleichrichterschaltung auftreten.

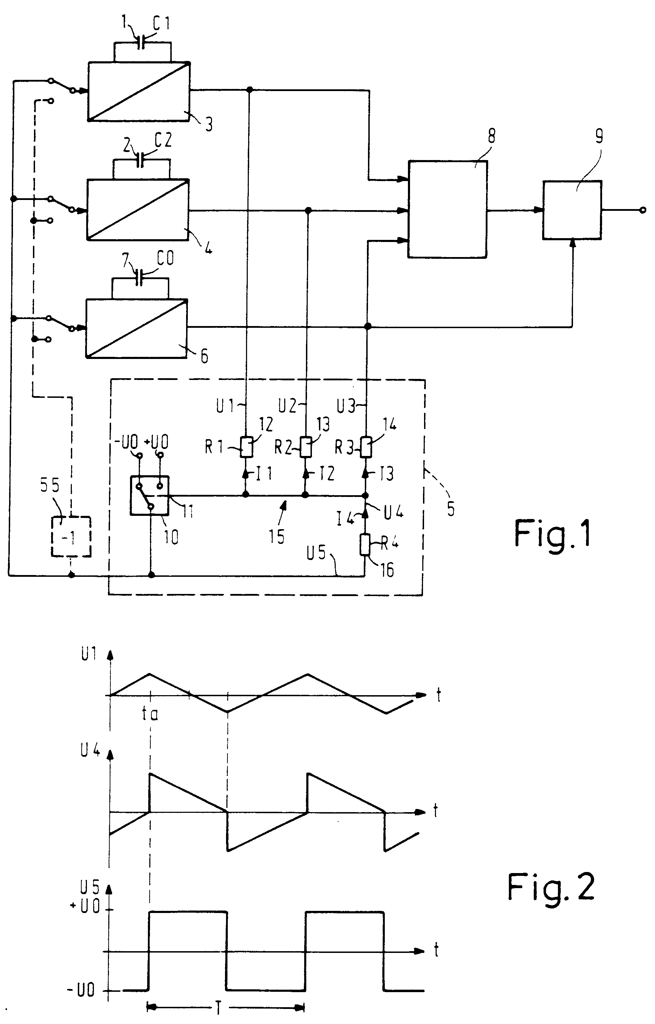

Die in Fig. 1 dargestellte Schaltungsanordnung dient zur Kompensation der Temperatur bei der Erfassung eines Differenzdruckes mittels eines Einkammer-Differenzdrucksensors. Ein solcher Einkammer-Differenzdrucksensor weist zwei mit Schichtelektroden belegte Membranen auf, die mit auf einem Grundkörper angeordneten Schichtelektroden Meßkondensatoren 1 und 2 bilden. Die Meßkondensatoren 1 und 2 sind in Fig. 1 dargestellt und weisen eine Kapazität C1 bzw. C2 auf. Die Membranen des Differenzdrucksensors schließen einen mit einer inkompressiblen Flüssigkeit, wie z.B. Silikonöl, gefüllten Hohlraum flüssigkeitsdicht ab.

Die Schaltungsanordnung nach Fig. 1 enthält jeweils für einen Meßkondensator 1 und 2 einen Meßintegrator 3 und 4. Den Meßintegratoren wird ein rechteckförmiges Ansteuersignal von einer Schmitt-Trigger-Schaltung 5 zugeführt. Das Ansteuersignal wird weiterhin noch einem Referenzintegrator 6 mit einem Kondensator 7 zugeführt, der die Kapazität C0 aufweist. Die beiden Meßsignale der Meßintegratoren 3 und 4 und das Ausgangssignal des Referenzintegrators 6 werden außer der Schmitt-Trigger-Schaltung 5 einem Rechenglied 8 zugeleitet. In der Schmitt-Trigger-Schaltung 5 werden die dreieckförmigen Meßsignale und das dreieckförmige Ausgangssignal des Referenzintegrators 6 addiert und mittels der Schmitt-Trigger-Schaltung 5 in ein rechteckförmiges Ansteuersignal umgeformt. Des weiteren werden die Meßsignale und das Ausgangssignal des Referenzintegrators 6 in einem Rechenglied kombiniert, wobei der temperaturabhängige Nullpunktversatz berücksichtigt wird. Der Ausgang des Rechengliedes 8 ist mit einem Eingang eines Gleichrichters 9 verbunden, der aus dem dreieckförmigen Ausgangssignal des Rechengliedes 8 ein Gleichsignal erzeugt, welches ein Maß für den Differenzdruckwert darstellt. Dem Gleichrichter wird noch das Ausgangssignal des Referenzintegrators 6 zugeführt.

Die Schmitt-Trigger-Schaltung 5 enthält einen Umschalter 10, an dessen einem Eingang der negative Signalpegel -U0 und an dessen anderem Eingang der positive Signalpegel +U0 anliegt. Der Umschalter verbindet in Abhängigkeit vom Signal an seinem Steuereingang 11 einen Eingang mit seinem Ausgang. Das Ausgangssignal des Umschalters 10 stellt das rechteckförmige Ansteuersignal dar. Der Summierer wird mittels dreier Widerstände 12, 13 und 14 realisiert, die einen gemeinsamen Anschluß aufweisen. Dabei wird das Meßsignal des Meßintegrators 3 über den Widerstand 12, das Meßsignal des Meßintegrators 4 über einen Widerstand 13 und das Ausgangssignal des Referenzintegrators 6 über einen Widerstand 14 zu einem gemeinsamen Anschluß 15 geführt, der auch mit dem Steuereingang 11 des Umschalters 10 verbunden ist. Der Ausgang des Umschalters 10 ist noch über einen Widerstand 16 mit dem Anschluß 15 verbunden. Mit der Schmitt-Trigger-Schaltung 5 werden die Meßsignale so beeinflußt, daß diese keine Temperaturabhängigkeit bis auf die Temperaturabhängigkeit des Nullpunktversatzes aufweisen. Dieser temperaturabhängige Nullpunktversatz wird im Rechenglied 8 korrigiert.

Die Wirkungsweise der Schmitt-Trigger-Schaltung 5 mit den Meßintegratoren 3 und 4 und dem Referenzintegrator 6 wird im folgenden mit Hilfe der Fig. 2 erläutert. Es sei zuerst angenommen, daß der Umschalter ein Ansteuersignal abgibt, dessen Signalpegel gerade verändert worden ist. Beispielsweise liegt die Ausgangsspannung U5 des Umschalters 10 auf dem Spannungspegel -U0. Am Anschluß 15 wird dann eine Spannung gebildet, die aus einem Summationssignal, welches aus der Summe der beiden Meßsignale und dem Referenzsignal gebildet wird, und einem Signal gebildet wird, das durch die Mitkopplung über den Mitkopplungswiderstand 16 aus der Spannung U5 gewonnen wird. Da die Meßintegratoren 3 und 4 und der Referenzintegrator 6 invertierende Integratoren sind, werden aus der negativen Spannung U5 jeweils durch die Integration zwei linear ansteigende Meßspannungen U1 und U2 und eine linear ansteigende Referenzspannung U3 gebildet. In Fig. 2 ist als Beispiel nur der qualitative Verlauf der Meßspannung U1 dargestellt. Nach dem Umschalten von der positiven Spannung +U0 zu der negativen Spannung -U0 wird durch die Mitkopplung eine negative Spannung U4 am Anschluß 15 gebildet. Durch das Ansteigen der Meßspannung und der Referenzspannung wird die Spannung U4 am Anschluß 15 linear ansteigen. Wenn die Spannung U4 Null erreicht, schaltet der Umschalter 10 um und am Ausgang des Umschalters 10 liegt die Spannung +U0 an. Durch die Mitkopplung erscheint am Anschluß 15 eine positive Spannung U4. Diese Spannung wird dann durch die Meßspannungen und die Referenzspannung bis Null vermindert. Danach schaltet der Umschalter wieder von der positiven Spannung +U0 zur negativen Spannung -U0 um. Die Zeitdauer zwischen zwei Umschaltungen wird als Periodendauer T bezeichnet.

5

Durch die Summierung der Meßsignale wird ein Signal gebildet, das von der Temperatur abhängt, aber nicht vom Druck. Verändert sich die Temperatur verändert sich auch die Kapazität der Meßkondensatoren 1 und 2. Dies hat beispielsweise eine Erhöhung der Steigung der dreieckförmigen Meßsignale zur Folge. Hierdurch wird die Schaltschwelle des Umschalters 10 zu einem früheren Zeitpunkt erreicht als vor der Temperaturänderung. Dadurch erhöht sich die Frequenz des Ansteuersignals bzw. der Meßsignale. Die Frequenz der Ansteuersignale bzw. der Meßsignale wird also im gleichen Maße verändert wie die Temperatur. Eine Veränderung der Amplitude der Ansteuersignale wird nicht bewirkt. Die Temperaturabhängigkeit des Einkammer-Differenzdrucksensors läßt sich aber nicht ausschließlich durch eine Summierung der Meßsignale kompensieren, sondern zusätzlich muß noch ein Referenzsignal berücksichtigt werden. Es läßt sich nämlich der Term c + d T aus der oben aufgeführten Gleichung (3) nicht ohne einen zusätzlichen Referenzintegrator kompensieren. Die Konstanten c und d dieses Terms finden sich im Nenner der nochmals hier aufgeführten Gleichung (4), die aus den Gleichungen (2) und (3) berechnet wird, wieder:

$$P = \frac{K2 + K3 \ 1/C1 - K4 \ 1/C2}{K5 + K6 \ (1/C1 + 1/C2)} \qquad (4)$$

Um den temperaturabhängigen Term zu kompensieren, wird mittels der Schmitt-Trigger-Schaltung 5 der Nenner der Gleichung (4) schaltungsmäßig realisiert. Die schaltungsmäßige Realisierung des Zählers wird im Rechenglied 8 realisiert, wo eine Kompensation des temperaturabhängigen Nullpunktversatzes durchgeführt wird.

Im folgenden wird der Zusammenhang zwischen den Konstanten K5 und K6 dargestellt. Aus Fig. 1 lassen sich die folgenden Gleichungen ableiten:

I4 = (U5 - U4)/R4     (5)

I1 = (U4 - U1)/R1     (6)

I2 = (U4 - U2)/R2     (7)

I3 = (U4 - U3)/R3     (8)

I4 = I1 + I2 + I3     (9).

Für die Spannungen U1, U2 und U3 gilt:

U1 = U5 t R C1     (10)

U2 = U5 t R C2     (11)

U3 = U5 t R C0     (12),

wobei t die Zeit und R jeweils der Wert eines Widerstandes in den Meßintegratoren 3 und 4 und im Referenzintegrator 6 ist. Die Gleichungen (5) bis (8) und die Gleichungen (10) bis (12) werden in die Gleichung (9) eingesetzt. Die so entstandene Gleichung wird für die Zeitdauer von t = 0 bis t = ta betrachtet. Zum Zeitpunkt ta ist der Umschaltpunkt erreicht. Hierfür gilt: U4 = 0 und U5 = -U0. Die daraus entstehende Gleichung lautet:

$$ta = \frac{1}{R9/(R6 \ R \ C1) + R9/(R7 \ R \ C2) + R9/(R8 \ R \ C0)} \qquad (13).$$

Die Zeitdauer von Null bis zum Zeitpunkt ta beträgt T/4.

In dem Rechenglied 8 wird eine Summierung der Spannungen U1, U2 und U3 mit den Konstanten Ka, Kb und Kc vorgenommen. Die Spitzenamplitude Us des Ausgangssignals des Rechengliedes 8 zum Zeitpunkt ta ist:

$$Us = U0\ ta\ (Ka/(R\ C1) + Kb/(R\ C2) + Kc\ /(R\ C0)) \qquad (14)$$

Die dann in der Gleichrichterschaltung 9 gebildete Gleichspannung Ua, die proportional einen Druckmeßwert ist, lautet:

$$Ua = \frac{2\ UO\ (Ka/(R\ C1) + Kb\ /(R\ C2) + Kc/(R\ CO))}{R9/(R6\ R\ C1) + R9/(R7\ R\ C2) + R9/(R8\ R\ CO)} \qquad (15).$$

Durch Koeffizientenvergleich der Koeffizienten in Gleichung (4) und Gleichung (15) ergeben sich die gesuchten Werte für die Konstanten K2 bis K6 der Gleichung (4):

K2 = 2 U0 Kc/(R C0)
K3 = 2 U0 Ka/R
K4 = - 2 U0 Kb/R
K5 = R9/(R8 R C0)
K6 = R9/(R6 R) mit R6 = R7

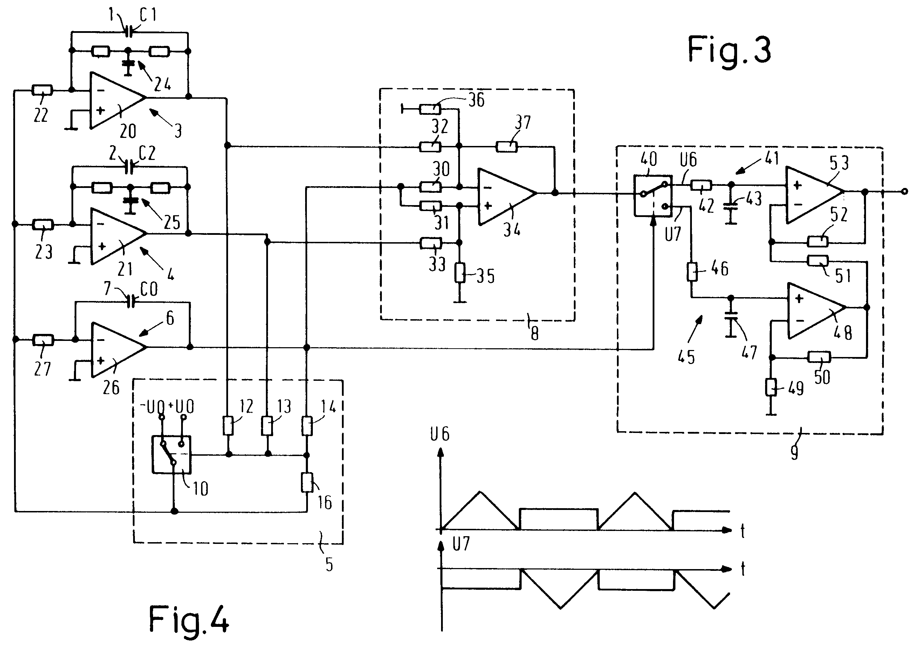

In Fig. 3 ist ein detalliert gezeichnetes Ausführungsbeispiel der Schaltungsanordnung nach Fig. 1 gezeigt. Die Meßintegratoren 3 und 4 bestehen jeweils aus einem Operationsverstärker 20 und 21, einem am invertierenden Eingang angeschlossenen Widerstand 22 und 23 mit dem Wert R und den im Rückkopplungszweig angeordneten Meßkondensatoren 1 und 2, zu denen jeweils ein Tiefpaß 24 und 25 geschaltet ist, die eine gleichspannungsmäßige Rückkopplung bewirken zur Vermeidung der Aufintegration von Offsets. Die nichtinvertierenden Eingänge der Operationsverstärker 20 und 21 sind an Masse geschaltet.

Der Referenzintegrator 6 enthält ebenfalls einen Operationsverstärker 26, dessen nichtinvertierender Eingang an Masse gelegt ist und dessen invertierender Eingang mit einem Anschluß eines Widerstandes 27 mit dem Wert R und einem Anschluß des Kondensators 7 verbunden ist. Der andere Anschluß des Kondensators 7 ist mit dem Ausgang des Operationsverstärkers 26 und einem Anschluß des Widerstandes 14 und mit Anschlüssen von Widerständen 30 und 31 verbunden, die in dem Rechenglied 8 angeordnet sind. Der Ausgang des Operationsverstärkers 20 ist einerseits mit einem Anschluß des Widerstandes 12 und andererseits mit einem im Rechenglied angeordneten Widerstand 32 verbunden. Der Ausgang des Operationsverstärkers 21 ist an einen Anschluß des Widerstandes 13 und an einen Anschluß eines im Rechenglied angeordneten Widerstandes 33 gelegt. Die anderen Anschlüsse der Widerstände 12, 13 und 14 sind mit dem Steuereingang des Umschalters 10 und mit dem einen Anschluß des Widerstandes 16 verbunden, dessen anderer Anschluß mit dem Ausgang des Umschalters 10 gekoppelt ist. Der Ausgang des Umschalters 10 ist des weiteren mit den anderen Anschlüssen der Widerstände 22, 23 und 27 verbunden.

Das Rechenglied 8 enthält des weiteren einen Operationsverstärker 34, dessen nichtinvertierender Eingang mit dem anderen Anschluß des Widerstandes 31, dem anderen Anschluß des Widerstandes 33 und mit einem weiteren, an Masse angeschlossenen Widerstand 35 verbunden ist. An den invertierenden Eingang des Operationsverstärkers 34 sind die anderen Anschlüsse der Widerstände 30 und 32, ein mit Masse verbundener Widerstand 36 sowie ein im Rückkopplungszweig angeordneter Widerstand 37 angeschlossen. Der Ausgang des Operationsverstärkers 34 ist noch mit dem anderen Anschluß des Widerstandes 37 verbunden. Mit Hilfe der Widerstände 30 bis 33 und 35 bis 37 werden die Konstanten Ka, Kb und Kc realisiert.

Der Ausgang des Rechengliedes 8, der auch der Ausgang des Operationsverstärkers 34 ist, ist mit dem Eingang eines Demultiplexers 40 verbunden, der in der Gleichrichterschaltung 9 angeordnet ist. Ein erster Ausgang des Demultiplexers 40 ist mit einem Mittelwertbildner 41 verbunden, der aus einem Widerstand 42 und einem Kondensator 43 besteht. Der Widerstand 42 ist zwischen dem ersten Ausgang des Demultiplexers 40 und dem nichtinvertierenden Eingang eines Operationsverstärkers 53 geschaltet. An den nichtinver-

EP 0 361 590 B1

tierenden Eingang des Operationsverstärkers 53 ist noch der an Masse geschaltete Kondensator 43 angeschlossen. Der andere Ausgang des Demultiplexers ist mit einem Mittelwertbildner 45 verbunden, der ebenfalls einen Widerstand 46 und einen Kondensator 47 enthält. Der eine Anschluß des Widerstandes 46 ist an den zweiten Ausgang des Demultiplexers 40 angeschlossen. Der andere Anschluß des Widerstandes 46 ist mit dem an Masse angeschlossenen Kondensator 47 und dem nichtinvertierenden Eingang eines Operationsverstärkers 48 verbunden. An den invertierenden Eingang des Operationsverstärkers 48 ist ein an Masse angeschlossener Widerstand 49 und ein mit seinem Ausgang verbundener Widerstand 50 gelegt. Der Ausgang des Operationsverstärkers 48 ist des weiteren mit einem Anschluß eines Widerstandes 51 verbunden, dessen anderer Anschluß an den invertierenden Eingang des Operationsverstärkers 53 und an einen Anschluß eines Widerstandes 52 gelegt ist, dessen anderer Anschluß mit dem Ausgang des Operationsverstärkers 53 verbunden ist. Der Ausgang des Operationsverstärkers 53 bildet auch den Ausgang der Gleichrichterschaltung 9. Gesteuert wird der Demultiplexer durch das Ausgangssignal des Referenzintegrators 6.

Während einer positiven Halbwelle des dreieckförmigen Ausgangssignals des Rechengliedes 8 ist der Eingang des Demultiplexers 40 mit dem Mittelwertbildner 41 verbunden. Der Mittelwertbildner 45 ist während der negativen Halbwelle des dreieckförmigen Ausgangssignals des Rechengliedes 8 mit dem Eingang des Demultiplexers 40 verbunden. Am Ausgang der beiden Demultiplexer liegt der Mittelwert der jeweiligen Halbwelle an, die der halben Spitzenwertamplitude des dreieckförmigen Ausgangssignals des Rechengliedes 8 entspricht. Die Operationsverstärker 53 und 48 und die Widerstände 49 bis 52 bilden ein Differenzglied, das an seinem Ausgang, das ist der Ausgang des Operationsverstärkers 53, die Differenz der beiden gemittelten Signale der Mittelwertbildner 41 und 45 abgibt. In Fig. 4 sind noch die an den Eingängen der Mittelwertbildner auftretenden Spannungen U6 (Eingang von Mittelwertbildner 41) und U7 (Eingang von Mittelwertbildner 45) dargestellt.

Die in Fig. 1 dargestellte Schaltungsanordnung kann auch zur Temperaturkompensation eines Zweikammer-Differenzdrucksensors oder eines Drucksensors eingesetzt werden, der nicht nach dem Differenzdruckprinzip arbeitet. Soll die Schaltungsanordnung für einen Zweikammer-Differenzdrucksensor verwendet werden, ist ein Referenzintegrator nicht erforderlich. Bei einem Drucksensor, der nicht nach dem Differenzdruckprinzip arbeitet, kann es erforderlich sein, daß das Ansteuersignal invertiert über einen Inverter 55 den Eingängen der Meßintegratoren 3 und 4 bzw. dem Referenzintegrator 6 zugeführt wird. Das ist z.B. dann der Fall, wenn der Drucksensor durch eine Gleichung beschrieben wird, bei der die Konstante K6 der Gleichung (4) ein negatives Vorzeichen aufweist. Ein solches negatives Vorzeichen kann auch bei Verwendung eines anderen Öls als Siliconöl im Einkammer-Differenzdrucksensor in der Gleichung (4) auftreten. Hierbei ist dann auch der Inverter 55 erforderlich.

## Patentansprüche

1. Schaltungsanordnung zur Temperaturkompensation von kapazitiven Druck- und Differenzdrucksensoren mit zwei Meßkondensatoren (1, 2), die jeweils im Rückkopplungszweig zweier Meßintegratoren (3, 4) angeordnet sind und deren sich mit dem zu erfassenden Druck bzw. Differenzdruck ändernde Kapazitätswerte von den Meßintegratoren (3, 4) zu Meßsignalen umgeformt werden, und mit einer Gegenkopplungsschaltung, welche wenigstens aus einem dieser Meßsignale ein temperaturabhängiges Ansteuerungssignal für die Meßintegratoren (3, 4) erzeugt,
dadurch gekennzeichnet, daß die Gegenkopplungsschaltung eine einzige Schmitt-Trigger-Schaltung (5) enthält, mit vorgegebenen und vom temperaturbeeinflußten Meßsignal angesteuerten Schaltschwellen, zur Erzeugung eines rechteckförmigen in seiner Frequenz temperaturabhängigen Ansteuersignals.

2. Schaltungsanordnung nach Anspruch 1,
dadurch gekennzeichnet, daß die Schmitt-Trigger-Schaltung einen Umschalter (10) zur Bereitstellung des rechteckförmigen Ansteuersignals durch Umschaltung zwischen zwei Signalpegeln an seinem Ausgang enthält, der über einen Mitkopplungswiderstand (16) an den über einen Widerstand (12, 13) mit einem Ausgang wenigstens eines Meßintegrators (3, 4) gekoppelten Steuereingang angeschlossen ist.

3. Schaltungsanordnung nach einem der vorhergehenden Ansprüche,
dadurch gekennzeichnet, daß ein Referenzintegrator (6) vorgesehen ist, der das Ansteuersignal von der Schmitt-Trigger-Schaltung (5) erhält und daß die Schmitt-Trigger-Schaltung (5) aus der Summe der Meßsignale und des vom Referenzintegrator (6) gebildeten Referenzsignals das Ansteuersignal erzeugt.

8

EP 0 361 590 B1

**4.** Schaltungsanordnung nach einem der vorhergehenden Ansprüche,
dadurch gekennzeichnet, daß die Differenz der dreieckförmigen Meßsignale und eine Nullpunktkorrektur in einem Rechenglied (8) gebildet und daraus durch Gleichrichtung in einer Gleichrichterschaltung (9) ein Gleichsignal gewonnen wird, welches proportional dem Differenzdruck ist.

**5.** Schaltungsanordnung nach Anspruch 4,
dadurch gekennzeichnet, daß die Gleichrichterschaltung (9) einen Demultiplexer (40), der die positive Halbwelle des Ausgangssignals des Rechengliedes (8) einem ersten Mittelwertbildner (41) und die negative Halbwelle einem zweiten Mittelwertbildner (45) zuführt, und ein Differenzglied (48 bis 53) enthält, das die Differenz der Ausgangssignale der Mittelwertbildner (41, 45) bildet.

**Claims**

**1.** A circuit arrangement for temperature compensation of capacitive pressure sensors and differential pressure sensors, comprising two measuring capacitors (1, 2), each of which is arranged in a respective feedback branch of two measuring integrators (3, 4) and whose capacitance values, varying as a function of the pressure or differential pressure to be detected, are converted into measurement signals by the measuring integrators (3, 4), and comprising a negative feedback circuit which generates a temperature-dependent activation signal for the measuring integrators (3, 4) from at least one of these measurement signals, characterized in that the negative feedback circuit comprises a single Schmitt trigger circuit (5) with preset switching thresholds controlled by the temperature-dependent measuring signal so as to generate a square-wave activation signal whose frequency is dependent on the temperature.

**2.** A circuit arrangement as claimed in Claim 1, characterized in that the Schmitt trigger circuit comprises a switch (10) for preparing the square-wave activation signal by switching over between two signal levels at its output, which switch is connected, via a positive feedback resistor (16), to the control input which is coupled, via a resistor (12, 13), to an output of at least one measuring integrator (3, 4).

**3.** A circuit arrangement as claimed in any one of the preceding Claims, characterized in that a reference integrator (6) is provided which receives the activation signal from the Schmitt trigger circuit (5), the Schmitt trigger circuit (5) forming the activation signal from the sum of the measurement signals and the reference signal formed by the reference integrator (6).

**4.** A circuit arrangement as claimed in any one of the preceding Claims, characterized in that the difference between the triangular measurement signals and a zero correction is formed in an arithmetic device (8), a DC signal which is proportional to the differential pressure being derived therefrom by rectification in a rectification circuit (9).

**5.** A circuit arrangement as claimed in Claim 4, characterized in that the rectification circuit (9) comprises a demultiplexer (40) which applies the positive halfwave of the output signal of the arithmetic device (8) to a first mean-value forming device (41) and the negative halfwave to a second mean-value forming device (45) and also comprises a differentiating member (48 to 53) which forms the difference between the output signals of the mean-value forming devices (41, 45).

**Revendications**

**1.** Circuit de compensation de température pour capteurs capacitifs de pression et de différence de pression comportant deux condensateurs de mesure (1, 2) le cas échéant disposés dans la branche de réaction de deux intégrateurs de mesure (3, 4) et dont les valeurs de capacité qui changent en conformité avec la pression respectivement la différence de pression à détecter sont converties en signaux de mesure par les intégrateurs de mesure (3, 4), et un circuit de contre-réaction engendrant au moins de l'un desdits signaux de mesure un signal de commande dépendant de la température et destinés pour les intégrateurs de mesure (3, 4), caractérisé en ce que le circuit de contre-réaction comporte un seul circuit trigger de Schmitt (5) présentant des seuils de commutation prédéfinis et commandés par le signal de mesure influencé par la température, pour engendrer un signal de commande rectangulaire dont la fréquence dépend de la température.

9

**2.** Circuit selon la revendication 1, caractérisé en ce que le circuit trigger de Schmitt comporte un commutateur (10) pour fournir le signal de commande rectangulaire par commutation entre deux niveaux de signal présents sur sa sortie, qui est raccordé par l'intermédiaire d'une résistance positive (16) à l'entrée de commande par l'intermédiaire d'une résistance (12, 13) couplée au moins à l'un des intégrateurs (3, 4).

**3.** Circuit selon l'une des revendications précédentes, caractérisé en ce qu'il est prévu un intégrateur de référence (6) qui reçoit le signal de commande en provenance du circuit trigger de Schmitt (5) et en ce que le circuit trigger de Schmitt (5) engendre le signal de commande en partant de la somme des signaux de mesure et du signal de référence délivré par l'intégrateur de référence (6).

**4.** Circuit selon l'une des revendications précédentes, caractérisé en ce que la différence des signaux de mesure triangulaires et une correction de zéro sont formées dans un élément arithmétique (8) et en ce que par redressage dans un circuit redresseur (9) on obtient un signal redresseur qui est proportionnel à la pression différentielle.

**5.** Circuit selon la revendication 4, caractérisé en ce que le circuit redresseur (9) présente un démultiplexeur (40) fournissant un premier élément de calcul de valeur moyenne (41) à la demi-onde positive et un deuxième élément de calcul de valeur moyenne (45) à la demi-onde négative du signal de sortie de l'élément arithmétique (8), ainsi qu'un élément de différence (48 à 53) formant la différence des signaux de sortie provenant des éléments de calcul de valeur moyenne (41, 45).

Fig.1

Fig.2

Fig.3

Fig.4

EP 0 361 590 B1